# EUROPEAN PATENT SPECIFICATION

(11) **EP 3 183 273 B1**
(45) Date of publication and mention of the grant of the patent: **25.11.2026**
(21) Application number: 15778019.8
(22) Date of filing: 19.08.2015
(51) Int. Cl.: C08B 37/08, C08L 5/08

(54) **METHOD OF ISOLATION AND PURIFICATION OF (MONO- AND DI-SUBSTITUTED) CHITIN ESTERS AND CHITIN COPOLYESTERS FROM REACTION MIXTURES**
VERFAHREN ZUR ISOLIERUNG UND REINIGUNG VON (MONO- UND DISUBSTITUIERTEN) CHITINESTERN UND CHITINCOPOLYESTERN AUS REAKTIONSGEMISCHEN
PROCÉDÉ D'ISOLEMENT ET DE PURIFICATION D'ESTERS DE CHITINE (MONO- ET DISUBSTITUÉS) ET COPOLYESTERS DE CHITINE OBTENUS À PARTIR DE MÉLANGES RÉACTIONNELS

(30) Priority: 22.08.2014 PL 40924014
(43) Date of publication of application: 28.06.2017
(73) Proprietor: Celther Polska Sp. z o.o., 05-170 Zakroczym (PL)
(72) Inventor: RIESKE, Piotr, PL-91-013 Lódz (PL); STOCZYNSKA-FIDELUS, Ewelina, PL-96-124 Maków (PL); SKOLUCKA, Karolina, PL-41-216 Sosnowiec (PL); PIASKOWSKI, Sylwester, PL-95-050 Konstantynów (PL)
(74) Representative: Kondrat, Mariusz
(86) International application number: PCT/IB2015/056296
(87) International publication number: WO 2016/027237

(56) References cited:
- EP-A1- 0 341 745
- EP-A1- 2 700 418
- EP-A2- 0 271 887
- WO-A1-90/07929
- CN-A- 103 951 622
- PL-A1- 400 256
- PL-B1- 220 238
- SKOLUCKA-SZARY KAROLINA ET AL: "Chitin dipentanoate as the new technologically usable biomaterial", MATERIALS SCIENCE AND ENGINEERING C, vol. 55, October 2015 (2015-10-01), pages 50 - 60, XP029180799, ISSN: 0928-4931, DOI: 10.1016/J.MSEC.2015.05.051

## Description

The subject of this invention consists in the method of isolation and purification of selected mono- and di-substituted esters and copolyesters of chitin from reaction mixtures in different forms (ranging from a powder to dense and difficult-to-stir mixture). Mono- and di-substituted esters and copolyesters of chitin isolated and purified according to this invention are characterized by their susceptibility to degradation, ease of cross-linking and excellent mechanical, tensile and user properties. The method of isolation and purification of selected mono- and di-substituted esters and copolyesters of chitin according to this invention is especially suitable for use on an industrial scale.

Biopolymers obtained in this way may potentially be used in many industrial branches (including packaging materials, construction materials, medical devices with dressing materials, pharmaceuticals and cosmetics, in particular).

Several methods of obtaining mono- and di-substituted esters and selected copolyesters of chitin were recognized.

First attempts of obtaining mono- and di-substituted esters of chitin by means of direct esterification of chitin with an organic acid (derived from its anhydride) in the presence of an acid catalyst have been described in several studies: Polymer Journal 11, 27-32, 1979; Polymer Journal 12, 695-700, 1980 and Polymer Journal 13, 241-245, 1981.

First of them entitled "Studies on Chitin. I. Acetylation of Chitin" (Polymer Journal 11, 27-32, 1979) presents the method for synthesis of diacetyl-chitin or acetyl-chitin with different degrees of esterification. According to the first method described in the study, acetyl-chitin with different degrees of acetylation was obtained by adding the chitin powder (5 g) to the mixture of methanesulfonic acid (20 ml), glacial acetic acid (30 ml) and acetic anhydride (in the proportion of 1.0-3.5 moles of acetic anhydride pre 1 mole of N-acetylglucosamine residue) at 0°C. The reaction mixture was stirred for 4 hours at 0°C and then left at 0°C overnight. Isolation of the product consisted in pouring the reaction mixture into a bath of crushed ice, filtration and washing with water. The polymer obtained in this way was then suspended in water and neutralized using sodium hydroxide to pH=7. Then, the whole mixture was brought to a boil in order to get rid of the rest of the acid. The product was then filtered off, washed by water and dried in vacuum. Diacetyl-chitin, on the other hand, was obtained by adding the powder chitin (50 g) to the mixture of methanesulfonic acid (200 ml) and acetic anhydride (300 ml) at 0°C and stirred in a stirrer. The reaction mixture was stirred for 3 hours at 0°C, then left at 0°C overnight. The product isolation was performed as in the case of acetyl-chitin with different degrees of acetylation. In the second method, which was based on the employment of perchloric acid as the reaction catalyst, the powder chitin (5 g) was added to the mixture of previously prepared solution of perchloric acid in glacial acetic acid (3,3 ml) and glacial acetic acid (45 ml) at 0°C. The reaction mixture was stirred for 5 hours at 0°C. Isolation of the product consisted in pouring the reaction mixture into a bath of crushed ice, filtration and washing with water. The polymer obtained in this way was then suspended in water and neutralized using sodium hydroxide to pH=7. Then, the whole mixture was brought to a boil in order to get rid of the rest of the acid. The product was then filtered off, washed by water and treated with boiling ethanol for 90 minutes. Then, the product was filtered off, washed by ethanol and dried in vacuum. Diacetyl-chitin was obtained by adding the chitin powder (50 g) into a mixture of acetic anhydride (620 ml) and perchloric acid in glacial acetic acid (33 ml) at 0°C. The reaction mixture was stirred for 3 hours at 0°C. The product isolation was performed analogically to isolation of acetyl-chitin with different degree of substitution using perchloric acid as the catalyst.

Moreover, the hereby cited study describes two other methods of acetylation of chitin: one based on the method described by Schorigin and Hait in which hydrogen chloride is used as the catalyst (the acetylation degree of 1.6) and the other one based on utilization of alkaline chitin and sodium acetate (the acetylation degree of 1.1). Both methods of chitin acetylation (the method by Schorigin and the method by Hait) are complicated, laborious and time-consuming. Isolation of the products is the same as in the case of the above described methods. All methods of synthesis and isolation described in the above mentioned and hereby discussed study lead to obtainment of acetyl-chitin characterized by different degrees of substitution, low efficiency, high polydispersity and are thus not suitable for use on an industrial scale.

The "Studies on Chitin. IV. Preparation of Acetylchitin Fibers" study (Polymer Journal 12, 695-700, 1980) presents two methods of direct acetylation of chitin fibres. According to the first one, chitin fibres (0.55 g) were treated with 20% aqueous solution of sodium acetate for 12 hours at room temperature, subsequently, the aqueous solution of sodium acetate was removed and the fibres dried in vacuum. Then, the dried fibres were acetylated at 95°C for 24 hours in the presence of vapours of acetic anhydride under reduced pressure. The resulting degree of acetylation of chitin fibres was as low as 0.2 only. According to the second method described in this study, the chitin fibres (0.55 g) were immersed in the mixture of perchloric acid and acetic anhydride (4 ml of acetic anhydride mixed with 0.1 ml of 80% perchloric acid) and left at 0°C for 24 hours. Subsequently, the fibres were washed in cold water, then once again with ethanol and finally dried in vacuum. In this case, the elemental analysis revealed the degree of acetylation to be equal to 1. Thus, the acetylation of chitin performed by each of these two methods is ineffective, leads to high degree of polydispersity and is not suitable for application on an industrial scale.

The "Studies on Chitin. V. Formylation, Propionylation and Butyrylation of Chitin" study (Polymer Journal 13, 241-245, 1981) presents a method for the preparation and isolation of propionyl-chitin, butyryl-chitin and formyl-chitin. According to this study, propionyl-chitin was obtained by adding the chitin powder (3 g) to a mixture containing methanesulfonic acid (12 ml), propionic acid and propionic anhydride. The volume of the mixture of propionic acid and propionic anhydride was 18 ml. The reaction mixture was stirred for 2 hours at 0°C and the gel obtained in this way was then stored at -20°C overnight. The product isolation was based on polymer precipitation using crushed ice, filtration and washing with water. The polymer obtained in this way was subsequently suspended in water and neutralized using sodium hydroxide to pH=7. Then, the whole mixture was brought to a boil in order to get rid of the rests of the acid. The product was then filtered off, washed by water and dried in vacuum. Butyryl-chitin was obtained and isolated in the very same way as in the case of propionyl-chitin, except that the acylating mixture was added butyric acid and butyric anhydride. Formyl-chitin was also synthesized and isolated in the same way, except that the acylating mixture contained formic acid and the catalyst only. In the case of propionyl-chitin, esters with different degrees of substitution (0.1 - 1.9) were obtained. The reaction efficiency ranged from 49% to 95%, with the highest values being related to esters of chitin with the degree of substitution equal to 1. In the case of butyryl-chitin, esters with different degrees of substitution (0.1 - 1.8) were obtained. Reaction efficiency ranged from 45% to 99%, with the highest values being related to esters of chitin with the degree of substitution ranging from 1.0 to 1.8. Finally, in the case of formyl-chitin, esters with different degrees of substitution (0.4 - 1.4) were obtained. Reaction efficiency ranged from 44% to 88%, with the highest values of efficiency being related to esters of chitin with the degree of substitution ranging from 1.0 to 1.8. In the case of the above mentioned esters of chitin, the degree of substitution as well as the reaction efficiency were modified by adjusting the proportions of acid anhydride to its respective acid in the acylating mixture. Esterified chitin derivatives obtained in this way did not present high molecular weights, the degree of substitution close to 2 with sufficiently high reaction efficiency. This is indicative of their considerably worse mechanical properties which means that they are less significant in terms of their usability. Moreover, the cited method of isolation is time-consuming and the neutralization step difficult to be controlled, due to which this method of synthesis and isolation of all the chitin esters mentioned in this study is of low industrial usefulness.

The PL169077 patent describes a method of dibutyryl-chitin synthesis and isolation. According to the invention, chitin, preferably the calcium carbonate-free krill chitin, is treated with butyric anhydride (in proportions of 10-20 volume parts of butyric anhydride per 1 weight part of chitin) in the presence of perchloric acid in butyric acid containing 1 volume part of 68-72% perchloric acid per 2-3 volume parts of butyric anhydride used in the amount of 0.5-3 volume parts per 1 weight part of chitin, serving as both the catalyst and the reaction medium. The reaction is conducted in two stages: the first stage is performed within the temperature range from -10°C to -15°C and takes 72 hours; then the second stage is performed within the temperature range of 20°C to 50°C and takes from 1 to 200 hours. The first step of the isolation of the reaction product from the reaction mixture consists of repeated washing of dense reaction mixture with ethyl ether aimed to remove the excess of butyric acid and unreacted butyric anhydride by means of the extraction. Then, the filtered and dried product is suspended in distilled water and neutralized using 3-5% aqueous solution of ammonia. The final product is isolated in the form of films obtained by filtration and subsequent evaporation of the solvent from solution obtained by dissolving the purified and dried product in a solvent such as acetone, methyl alcohol, methylene chloride, chloroform, or alternatively in the form of a powder by water precipitation of dibutyryl-chitin from the dimethylformamide solution prepared from purified and dried product. According to the authors, dibutyryl-chitin is obtained with the reaction efficiency above 90%, the degree of esterification of 2, and the intrinsic viscosity determined in acetone at 25°C in the range from 0.3 to 1.8 dl/g, depending on conditions under which the reaction was performed.

A drawback of the method of dibutyryl-chitin isolation described in the PL169077 patent in terms of its utilization on an industrial scale consists in the employment of diethyl ether in order to isolate the final product, owing to its specific properties. This ether is an extremely flammable liquid, creating an explosive mixture in contact with air and oxygen. Moreover, it tends to form highly boiling peroxides making the distillation difficult, which, in case of uncontrolled amount thereof, may be at risk of explosion. Thus, the hereby described method of isolation of dibutyryl-chitin is a multistage, time-consuming and cost-ineffective process.

A different way of synthesis and isolation of dibutyryl-chitin is described in the PL203621 patent. It is based on chitin acylation using the acylating mixture consisting of butyric anhydride and perchloric acid, in the temperature range of 0-15°C (while maintaining the ratio of 1 weight part of chitin per 5 to 10 volume parts of butyric anhydride and 0.2-0.5 volume parts of 68-72% perchloric acid). The reaction is performed within the temperature range from 20°C to 30°C for up to 10 hours. The isolation is based on mixing the reaction mass with an organic solvent (such as acetone, ethyl acetate, methyl alcohol), its optional subjecting to clarifying filtration, excess water precipitation, washing and drying. The organic solvent may contain an agent neutralizing the perchloric acid, such as ammonia, pyridine, aqueous solution of sodium or potassium hydroxide, hydrogen carbonate, carbonate or acetate used in excess compared to the amount of perchloric acid and preferentially at lower temperatures. According to authors, the cited reaction yields dibutyryl-chitin with high degree of purity and high efficiency.

It is worth noticing that alike the method for obtainment of dibutyryl-chitin described in the PL169077 patent, this method of chitin acylation is also difficult to be performed on an industrial scale due to hindered control of heat and mass exchange, the formation of reaction products with different degrees of esterification (in the initial phase, dropwise addition of the acylating mixture into chitin powder results in local increase of the temperature and local esterification of chitin), consumption of large amounts of water, neutralization of dense reaction mass using the solvent containing strong neutralizing agent capable of inducing both the hydrolysis of ester bonds as well as formation of other difficult-to-be-removed side products. Moreover, increased temperature may lead to local deacetylation of formed reaction products.

Also known is the patent application P.389421, which relates to the preparation of esters of chitin. Commercially available chitin purified of calcium carbonate is added to the acylating mixture, consisting of butyric anhydride and methanesulfonic acid. The way in which the chitin esters are obtained, exemplified with dibutyryl-chitin, is characterized by the fact, that the process of dosing of chitin and further reaction is conducted in a device in the form of a vertical cylindrical tank-type kneader or mixer equipped with a cooling jacket and horizontal, preferably Z-shaped stirrers with internal cooling, with their axes being embedded in side walls of the tank. According to the authors of the application, conducting the reaction under given conditions (time, temperature), dibutyryl-chitin with the intrinsic viscosity above 1,5 dl/g can be obtained. Once the reaction is finished, the reaction mixture is being cooled down and dissolved in organic solvent. The resulting polymer solution is subject to clarifying filtration and obtained dibutyryl-chitin product is being isolated in a known way, i.e. using crushed ice, and washed by distilled water until complete removal of butyric acid odour.

It should be noted that this is also very time-and-energy-consuming process (cooling required even at the stage of dissolution). Since the reaction mixture contains significant excesses of butyric and methanesulfonic acid, neutralization of such strongly acidic environment requires significant amounts of water and energy, what generates large amounts of waste water requiring specialized disposal. Consequently, employment of this process on an industrial or semi-industrial scale may not be economically advantageous. Due to difficult form of isolated reaction product (coarse-grained viscous precipitate), achieving high reaction efficiency and a product with constant degree of esterification (instead of the mixture of products with various degrees of esterification) is difficult. Furthermore, the step of dissolution of the reaction mixture in ethanol is strongly exothermic owing to the fact that the reaction mass is very dense and sticky, what makes its homogenization in the solvent (the mass exhibits high dynamic resistance) and, most of all, the heat exchange difficult and leads to point temperature jumps to occur in the reaction mixture. Increased temperature, in turn, negatively influences the product itself on one hand (leads to "gelation" of the system and degradation of the polymer chain, deacetylation of esters and diesters of chitin), while favouring at the same time the formation of ethyl methanesulfonate - a side product obtained due to esterification of methanesulfonic acid with ethanol. This ester is mutagenic, teratogenic and probably carcinogenic. Its removal from the polymer solution is possible only by means of the precipitation, which is, however, also difficult owing to the form in which dibutyryl-chitin is obtained (less or more "condensed" fibres, depending on the amount of the solvent and the density of the solution). The cited method of obtainment of chitin esters and diesters is characterized by many limitations, which result ultimately in its ineffective employment on an industrial scale. In the reaction of esterification of chitin according to the cited protocol, a mixture of other anhydrides can be used in order to prepare the acylating mixture.

According to the P.400256 patent application, obtainment of chitin esters and copolyesters involves the pre-mixing of 1 mole of cooled alpha chitin (temperature range of 0-5°C), preferably purified of calcium carbonate, with 4-10 moles of butyric anhydride, or alternatively with 4-10 moles of the mixture of anhydrides containing the butyric and acetic anhydride in any mutual molar ratio, performed in the reaction vessel at room temperature. The reaction mixture is left at the temperature (20-30°C) for 2 to 48 hours. Then, the mixture in the reaction vessel is slowly added with 70-72% perchloric acid (1.8-2.5 moles of the acid per 1 mole of chitin) with continuous mixing of the content of reaction vessel. It is an exothermic process, which, according to the invention, can be controlled by cooling down the reaction environment (the temperature in the reaction vessel should be kept within the range from -5°C to 35°C) and by adjusting both the addition of catalyst to the reaction mixture and the speed of stirring of the reaction vessel content. In the next step, while continuing the slow stirring of the reaction mixture, the esterification reaction is conducted at the temperature of 15-30°C for 2 to 8 hours, or the reaction mixture is left without any further stirring at the temperature of -30°C to 10°C for 2 up to 48 hours. Then the reaction mixture is washed by ethyl acetate (150 ml of the solvent per 10 g of post-reaction mass), preferably containing a neutralizing agent, such as sodium carbonate or hydrogen carbonate, sodium acetate or ammonia, added in order to neutralize the perchloric acid. The whole mixture is neutralized to pH=7. In order to remove the ethyl acetate, the product is subject to filtration and then it is washed with additional portions of ethyl acetate in order to remove the rests of anhydrides, butyric acid and acetic acid. Following subsequent filtration, the product is dried and then, if the ethyl acetate contained the neutralizing agent, it is washed with the excess water to pH=7, filtered from water and dried. The next step consists in dissolution of dried project in an organic solvent (such as methyl alcohol, ethyl alcohol, isopropyl alcohol, acetone, dimethylformamide, N-methylpyrrolidone) in the amount of 1 g of the reaction product per 20 to 50 ml of the solvent. The resulting polymer solution is subject to clarifying filtration. Final product is precipitated by excess water, filtered and dried. The hereby cited method for production and isolation of dissolvable chitin esters describes only the obtainment of two esters of chitin: dibutyryl-chitin and chitin butyryl-acetic copolyester. The procedure of obtainment and isolation of the final product consists of several stages, requires the use of significant amounts of organic solvents, energy, and generates high amounts of waste water which are difficult to be disposed of. Moreover, chitin derivatives obtained in this way are characterized by wide range of relatively low molecular weights as well as deacetylation of the reaction products leading to partial gelation of the system, which significantly hinders their isolation, especially the stage of its dissolution and filtration. The hereby cited method of isolation of chitin esters may be used only with perchloric acid used as the reaction catalyst. In the above mentioned document, no additional detailed description of the way in which the product is isolated was provided. Provided is only the amount of ethyl acetate, while no information on duration of mixing, type of stirrer or the way of washing (the amount of used neutralizing agent, its form - whether it is a powder or aqueous solution - the frequency of washing), or other factors important in the case of this type of reaction are provided. It should be noted, that these parameters are crucial in the case of this type of polymers. As the Applicant emphasizes, this method is suitable for the reaction product, which is in the form of a "wetted powder" following the reaction. Moreover, local high concentration of NaHCO₃ in the organic solvent is dangerous with respect to NH-CO-CH₃ bonds (which become cleaved under basic conditions).

In all the above mentioned methods of synthesis and isolation of mono- and di-substituted esters and copolyesters of chitin (exemplified mainly with acetyl-chitin, dibutyryl-chitin and chitin butyryl-acetic copolyester), the product is obtained with relatively low reaction efficiency, contaminated with the mixture of products with different degrees of esterification as well as with side products arising during the purification process (in the case of methanesulfonic acid, the temperature increases rapidly during the dissolution of reaction mass in ethanol, what favours the side reaction, namely the formation of ethyl methanesulfonate, exhibiting genotoxic and cytotoxic properties, which, from the point of view of the medical devices, may be a source of risk).

Chitin acylation is carried out under strongly acidic conditions. Methanesulfonic acid or perchloric acid are used as catalysts. In order to wetting the chitin and to bring the whole reaction mixture to the form of a suspension, large excesses of catalyst and anhydride are used. In the course of the reaction, the reaction mixture gradually thickens and thus if higher values of viscosity of the final product are preferred (the properties of final product depend on conditions under which the reaction is conducted, the type and amount of used reagents and the duration of reaction) the reaction mixture becomes an almost solid mass.

Therefore, the classic methods of the product purification are useless in this case and lead to the formation of side products and final products with degenerated polymer chain.

It should be noted, that the known methods of synthesis and isolation of chitin diesters are mainly applied in the case of dibutyryl-chitin and chitin butyryl-acetic copolyester. No other analogical chitin diester (with extended polymer chain) has ever been successfully obtained using the methods described here in the current state of the art.

Therefore, the aim of the invention was to develop a method for synthesis of chitin diesters and their purification from the reaction mixtures of various forms (from powder form to a form of dense and hardly-to-stir-and-control "resin"), which would be universal, suitable for application in the case of any type of chitin diesters, irrespectively of the reaction catalyst used, assuring at the same time high reaction yields, high degrees of esterification and high product purity.

Surprisingly, it turned out that the use of an aqueous solution of acidic sodium carbonate in combination with grinding the reaction mixture taking the form of fine granules, sticky powder, liquid greasy polymeric mass or an almost solidified thick resin-like polymeric mass, depending on the type and amount of used anhydrides, reaction time and temperatures, allows for pure chitin diesters with high reaction yields and standardized molecular weights to be obtained, limiting at the same time the number of required technological steps. This method can be applied in the case of any chitin derivative including its copolyesters. It should be noted, that the methods of isolation of the products of chitin esterification described above in the current state of the art are applicable only in reaction mixtures taking the form of sticky powders.

According to this invention, the method of isolation of resulting chitin esters/diesters consists in the termination of the chitin acylation reaction by adding to the dense reaction mixture the aqueous solution of weak alkalizing agent, such as the carbonate/hydrogen carbonate of alkali metal, preferably NaHCO₃, and isolation of the raw reaction product in the form of a homogeneous precipitate, preferably using the steel blade mechanical mixer in the shape of crossed anchor stirrers with an additional element pulling the distributed reaction mixture off the walls of the reaction vessel and reverting it back towards the stirrer in order to assure its thorough homogenization. The step of simultaneous reaction mass neutralization as well as its grinding and the isolation of the raw reaction product may or may not include a cooling step (cooling to room temperature), depending on the type of the reagents used.

The use of both the weak alkalizing agent, such as the 1-5% aqueous solution of NaHCO₃ (preferably 2.5-3.0%), as well as the grinding device immediately after the termination of the synthesis (prior to dissolution step), in contrast to methods described above in the current state of the art, is crucial in the case of polymers taking such difficult form. The use of 1-5% aqueous solution of NaHCO₃ immediately after the termination of the reaction (prior to dissolution step) does not lead to a sudden point increase of the temperature, which occurred in the case of classic methods of isolation of the reaction products described above in the current state of the art. Sudden point temperature increases may lead to heterogeneity of the resultant product as well as to chitin deacetylation, i.e. the detachment of substituents - which concerns especially the long alkyl chains of chitin diesters formed as a result of esterification with anhydrides, the chains of which are longer than the ones of acetic or butyric anhydride. Moreover, it effectively neutralizes carboxylic acids formed as a result of hydrolysis of anhydrides as well as the excesses of strong acids used as catalysts in chitin esterification reactions. Moreover, the neutralizing agent itself in the concentration of 1-5% (preferably 2.5-3%) does not lead to hydrolysis of ester bonds of the newly formed product, or deacetylation of the chitin ring which might have possibly lead to gelation of the whole reaction system.

Neutralization, homogenization and grinding of the raw reaction product immediately after the termination of the reaction by means described in this invention is innovative compared to classical methods described above in the current state of the art.

The invention consists in a method of isolation and purification of mono- and/or di-substituted esters and copolyesters of chitin from the reaction mixture of products of chitin acylation performed by using the acid anhydrides, preferably anhydrides of butyric, valeric or hexanoic acid, in the presence of acidic catalysts, preferably methanesulfonic or perchloric acid, reaction mixture being in the form of loose powder as well as the dense paste or grease. The method comprising steps:
i. adding to the reaction mixture 1-5% w/v, preferably 1-3% w/v aqueous solution of acidic sodium carbonate to neutralize the reaction mixture to the pH = 7,
ii. grinding of the reaction mixture during neutralisation process in order to obtain a homogeneous precipitate,
iii. filtering,
iv. washing with water,
v. drying,
vi. dissolving in solvent which is alcohol or ketone,
vii. precipitating in water,
viii. washing with water,
wherein no extraction process is performed before step i.

Preferably, the step of grinding the reaction mixture should be performed using a steel blade mixer in the shape of crossed anchor stirrers with an additional element pulling the distributed reaction mixture off the walls of the reaction vessel and reverting it back towards the stirrer.

Preferably, the steps of addition of aqueous solution of acidic sodium carbonate and grinding of the reaction mixture in order to obtain the homogeneous precipitate should be repeated at least 3 times, depending on the type of reaction mixture.

In the dissolution step, alcohol or ketone (preferably ethanol or acetone) should be used. The best outcomes can be obtained for mixtures with solvent to water ratio between 99:1 and 90:10, with the solubility of the product rising as the amount of water in the solvent increases within the hereby presented range of ratios.

Below is the summary of advantages of this process:
- enables more efficient penetration of alkalizing agent,
- results in more efficient purification, causing lower consumption of organic solvent in the next step, i.e. in the dissolution step,
- technologically easier step of filtration of the polymeric solution (lack of partially gelled system),
- faster filtration due to more homogeneous polymeric solution (more effective separation of unreacted and incompletely esterified chitin),
- elimination of flammable and dangerous ethers;
- reduced water consumption in the washing step and consequently much faster process of washing off the remainders of unreacted reaction substrates,
- obtainment of the raw product in homogeneous form (from fine to coarse precipitate),
- obtainment of less or more viscous precipitates, depending on the type of chitin diester as well as the reaction conditions; facilitates further purification,
- possibly usable on an industrial scale,
- less energy-consuming.

It should be noted that the solubility of carboxylic acid decreases as the length of its chain increases. Therefore the chemical bond obtained in the reaction of a weak base with an organic acid in aqueous environment immediately after the termination of the reaction is more effective compared to the one obtained for example in the environment of organic solvent - the dense polymeric mass and, as a consequence, shortens the duration of subsequent stages of the product isolation (especially the very long step of washing the carboxylic acids such as the valeric acid or haxanoic acid off the reaction product).

This method allows for product of high purity, constant degree of substitution (within 1.85-1.99), high molecular weights and low polydispersity coefficient to be obtained, maintaining at the same time the high reaction yields ranging between 75% and 95%, depending on the type of synthesised chitin diester. The developed method seems to have an universal applicability, irrespectively of the catalyst used (methanesulfonic acid or perchloric acid). This method was successfully used for isolation of chitin diesters such as acetic, propionic, butyric, valeric or hexanoic ester, as well as chitin copolyesters, including the butyryl-valeric copolyester.

Examples of the reaction of neutralization of carboxylic acids used in the reaction of chitin esterification:

C₂H₅COOH + NaHCO_{3aq.}→ C₂H₅COONa↓ + H₂O + CO₂↑

C₃H₇COOH + NaHCO_{3aq.}→ C₃H₇COONa↓ + H₂O + CO₂↑

C₄H₉COOH + NaHCO_{3aq.}→ C₄H₉COONa↓ + H₂O + CO₂↑

C₅H₁₁COOH + NaHCO_{3aq.}→ C₅H₁₁COONa↓ + H₂O + CO₂↑

catalysts:

HClO₄+ NaHCO_{3aq.} → NaClO₄+ H₂O + CO₂↑

CH₃SO₃H + NaHCO_{3aq.} → CH₃SO₃Na + H₂O + CO₂↑

Employment of this purification sequence in the case of the esterification reaction performed in the presence of methanesulfonic acid and further dissolution of the raw reaction product obtained by adding the aqueous solution of NaHCO3 in ethanol prevents the formation of ethyl methanesulfonate, a toxic ester which is generated in the case of the methods described above in the current state of the art, and which requires large amounts of energy and high costs in order to be disposed of.

Moreover, the method described in the invention, owing to its less complexity, provides higher reaction yields, does not require the use of difficult-to-handle organic solvents and is less energy-consuming. Furthermore, with respect to employed reagents, the method is also more ecological and safe, produces less amounts of technological waste water, is cheaper and may be successfully used on an semi-industrial or industrial scale.

According to this invention, the method of isolation of obtained esters/diesters of chitin is based on termination of the reaction of esterification of chitin (acylation of chitin by selected acid anhydride in the presence of acidic catalyst, preferably methanesulfonic or perchloric acid) by adding to the dense (in the case of certain chitin diesters - almost solidified) reaction mixture, the excess (1-8 fold) of aqueous solution of weak alkalizing agent such as the carbonate or hydrogen carbonate of alkali metals, for example 1-5% (preferably 2-3%) aqueous solution of NaHCO₃. Then, the reaction mixture containing the aqueous solution of weak alkalizing solution is subject to grinding, preferably using the steel blade mechanical mixer in the shape of crossed anchor stirrers with an additional element pulling the distributed reaction mixture off the walls of the reaction vessel and reverting it back towards the stirrer in order to assure its thorough homogenization *(flow baffles* or *fast rotating choppers* - fast rotating propeller-like elements placed above the stirrer). The reaction mixture is being grinded at the speed of 10-8000 rpm. for a period of 20 seconds up to 15 minutes, depending on the density/type of the reaction mixture (20 seconds in the case of fine powder reaction mixture, 15 minutes in the case of dense polymeric mass, depending also on the scale of performed reaction). The rotational frequency depends on the form of the reaction mixture, whereas if necessary, the whole system may be cooled to room temperature during the neutralization. A precipitate in the form of a fine or coarse sediment, or less or more viscous mass (depending on the type of chitin diester as well as the reaction parameters) is isolated. The precipitate separated in the aqueous solution of weak alkalizing agent is left for further more efficient neutralization taking additional 2 to 30 minutes. Then, the raw product is isolated from the aqueous solution of the reaction mixture containing sodium salts of respective organic and inorganic acids by means of the filtration. Subsequently, the isolated raw product is subject to re-purification procedure employing the aqueous solution of NaHCO₃ and the grinding/cutting device. This procedure is repeated 3-10 times, depending on the type and physico-chemical properties of chitin diester, which depend upon the conditions under which the reaction has been performed, until the pH of the solution reached pH=7.0. The next step consists in drying the raw product at room temperature for 12 hours or at the temperature of 60-120°C for a period of 2-10 hours. After drying, the product is dissolved in an organic solvent (maximum permissible water content in organic solvent is 0-10%, whereas the solubility of the polymer in the solvent rises as the water content increases within the range provided) such as: ethyl alcohol, acetone, dimethylformamide, etc., subjected to clarifying filtration and separated by means of the precipitation using excess water. The final product is washed off the remainders of the organic solvent. The product is then dried at the temperature of 60-120°C for 2-10 hours. In the case of certain chitin diesters, the dried product is re-dissolved in organic solvent (maximum water content in organic solvent is 0-10%, with the solubility of the polymer in solvent rising as the water content increases within the provided range), then re-subjected to clarifying filtration (separation of very fine chitin powder from the reaction product), precipitated with the excess water, washed off the remainders of organic solvent and dried at 60-120°C for 2-10 hours.

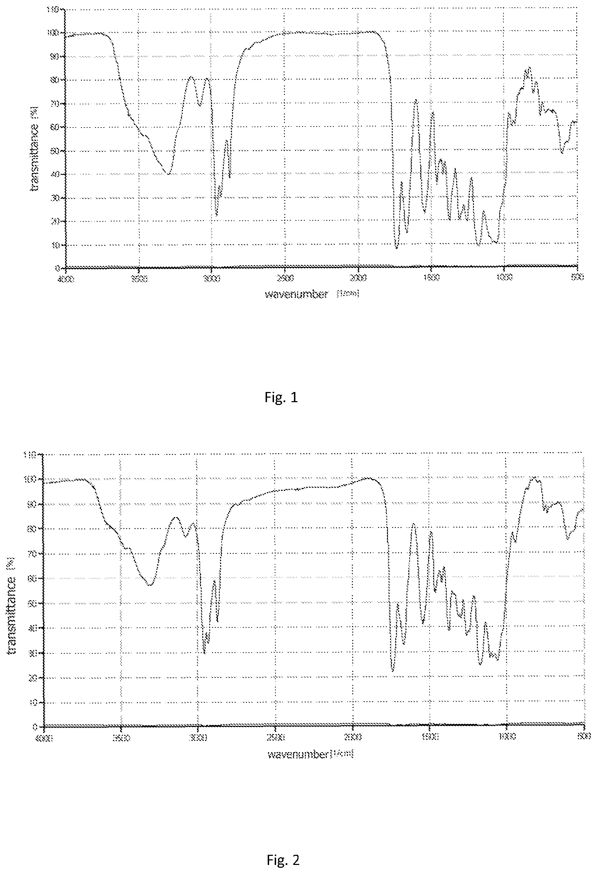

Without limiting the range of its applicability, the invention is exemplified by the below presented examples as well as through the Figure 1, which shows the IR spectrum of the film (1% acetone solution) made of dibutyryl-chitin with the intrinsic viscosity (in acetone at 25°C) of 1.30 dl/g (the spectrum was obtained using the Thermo Nicolet's Nexus FT-IR spectrometer), the Figure 2, which shows the IR spectrum of the film (1% acetone solution) made of divaleryl-chitin with the intrinsic viscosity (in acetone at 25°C) of 1.51 dl/g (the spectrum was obtained using the Thermo Nicolet's Nexus FT-IR spectrometer). Regardless the method of synthesis (i.e. the selection of the acid anhydride, the catalyst or reaction conditions), compilation of the method of synthesis with the method of purification presented in the invention provides better results compared to those discussed above in the current state of the art.

### Example 1

### Optimized method of the synthesis and isolation of dibutyryl-chitin according to the invention

Butyric anhydride (540 ml) was placed in a 5 litre three-neck glass reaction vessel and cooled down to the temperature of -5°C to -2°C using the salt water bath. While stirring vigorously with a 4-blade propeller mechanical stirrer rotating at 120-140 rpm, 320 ml of methanesulfonic acid was added dropwise within 30 minutes at the temperature of -2°C to 0°C. Subsequently, 100 g of shrimp alpha chitin purified of the calcium carbonate was dosed in small portions into the acylating mixture. Chitin was characterized by the intrinsic viscosity of 10.8 dl/g (determined at 25°C in a 5%LiCl/DMAC solvent system) and the viscometric average molecular weight calculated according to the formula $\left[η\right] = 0.0024 * {M}_{W}^{0.69}$ equal to 197020.26 g/mol. The reaction vessel was removed from the water bath and the reaction mixture was stirred using a mechanical stirrer (at 120-150 rpm) for 15 minutes. After thorough mixing of the reaction mixture, the esterification reaction was performed without further mixing at 23°C for additional 2.5 hours. The reaction was then terminated by adding to the mixture the 2.5% aqueous solution of NaHCO₃ (1000 ml) and mixed intensively (grinded to obtain a homogeneous polymeric precipitate) for about 2 minutes using the steel blade mechanical mixer in the shape of crossed anchor stirrers with an additional element pulling the distributed reaction mixture off the walls of the reactor and reverting it back towards the stirrer. Homogeneously grinded polymeric mass was then left to neutralize in 2.5% aqueous solution of NaHCO₃ for about 20 minutes. After this period, the precipitate was filtered, placed again in the reaction vessel and poured with a fresh portion of 2.5% aqueous solution of NaHCO₃. Then the grinding step was repeated for 60 seconds and the mixture was then left for another 15 minutes. The precipitate was filtered. The procedure was repeated two more times. Following the filtration of the precipitate in the last neutralization stage, the precipitate was washed with distilled water using the Buchner funnel to obtain pH=7.0 (10 l of distilled water). When the filtrate reached pH=7, the polymeric precipitate was filtered in vacuum and further dried in air for another 12 hours at room temperature. Obtained raw product was then dissolved in 3.5 l ethanol denatured with 2% acetone. Fully dissolved polymeric solution was then subjected to clarifying filtration using the G1 density Schott glass funnel. The filtrate was precipitated in 7-fold (v/v) excess of distilled water, and subsequently filtered in vacuum using the Buchner's funnel, washed in approximately 20 litres of distilled water in order to remove the remainders of the solvent. Dibutyryl-chitin was filtered in vacuum and dried at 100°C.

As a result, 142.7 g of dibutyryl-chitin with the intrinsic viscosity (at 25°C) of 1.30 dl/g was obtained.

Molar masses (Mₙ, M_{w}, M_{z}) and mass dispersion (M_{w}/Mₙ) were determined by gel chromatography in a measurement system consisting of the Agilent Technology 1200 isocratic pump, the DAWN HELEOS (Wyatt Technologies) multi-angle light scattering detector (λ=658 nm), the Δn-2010 RI (WGE Dr. Bures) refractometric detector and a set of PL gel guard, PL gel MIXED-C x 2, PSS GRAM 100 Å columns. Measurements were performed in DMF containing 5 mmol/l LiBr at 45°C, using the eluent flow of 1 ml/min. Prior to injection onto column, the sample solution was filtered using the 0.20 µm pore size SRP 15 filter. The value of increment of the refractive index was determined using the SEC-3010 dn/dc refractometric detector at the wavelength of λ=620nm. ${M}_{n} = 1.19 ⋅ {10}^{5} \left[g/mol\right]$ ${M}_{w} = 1.70 ⋅ {10}^{5} \left[g/mol\right]$ ${M}_{z} = 2.94 ⋅ {10}^{5} \left[g/mol\right]$ ${M}_{w} / {M}_{n} = 1.43$

The elemental analysis was performed using the Elementar's VARIO EL III analyser. The combustion of the sample was performed at the temperature of 1150°C in a helium atmosphere containing oxygen.

%C - 54.09; %H -7.44; %N - 3.92.

### Example 1a

### Method of the synthesis and isolation of dibutyryl-chitin according to the invention

**Butyric anhydride (54 ml) was placed in a 500 ml three-neck glass round bottom flask and cooled down to the temperature of -2°C to 0°C using the salt water bath. While stirring vigorously with a steel blade mechanical mixer in the shape of crossed anchor stirrers rotating at 50-80 rpm, 32 ml of methanosulfonic acid was added dropwise within a period of 15 minutes at the temperature of 0°C to 5°C. Subsequently, 10 g of shrimp chitin purified of the calcium carbonate was dosed in small portions into the acylating mixture. Chitin was characterized by the intrinsic viscosity of 10.8 dl/g (determined at 25°C in a 5%LiCi/DMAC solvent system) and** the **viscometric average molecular weight calculated according to the formula** $\left[η\right] = 0.0024 * {M}_{W}^{0.69}$ **equal to 197020.26 g/mol. The reaction mixture was stirred using mechanical stirrer (rotational speed of 80-100 rpm) for 5 min. After thorough mixing of the reaction mixture, the esterification reaction was performed without further mixing at room temperature for additional 2.5 hours. The reaction was terminated by adding to the mixture the 4% aqueous solution of NaHCO₃ (500 ml) and intensive grinding of the reaction mixture using the steel blade mixer in the shape of crossed anchor stirrers with an additional element pulling the distributed reaction mixture off the walls of the flask and reverting in back towards the stirrer in order to assure its thorough homogenization (5000 rpm) to obtain a homogeneous precipitate (30 s) and then left for 3 minutes for further neutralization. After 3 minutes, the precipitate was filtered, placed again in the reaction flask and poured with a 200 ml of 4% aqueous solution of NaHCO₃. Then the grinding step was repeated for 20 seconds and the mixture was left for another 2 minutes. The precipitate was filtered. The procedure was repeated one more time. Following the filtration of the precipitate in the last stage of neutralization, the extraction of residues of organic acid from the precipitate was performed (100 ml of tert-butyl methyl ether, 5 minutes). After 5 minutes, the precipitate was filtered, placed again in the reaction flask and poured with a fresh 100 ml of tert-butyl methyl ether (extraction time 5 min.). The precipitate was filtered in vacuum using the G1 density Schott glass funnel. The procedure was repeated one more time. After the last extraction, the precipitate was washed with 20 ml of tert-butyl methyl ether and filtered in vacuum using the G1 density Schott glass funnel. Without drying step, the raw product was dissolved in 220 ml of acetone (in the room temperature). Fully dissolved polymeric solution (after 30 min) was then subjected to clarifying filtration using the G2 density Schott glass funnel. The filtrate was precipitated in 1,6 l of distilled water, and subsequently filtered in vacuum using the Buchner's funnel and washed in approximately 5 litres of distilled water in order to remove the remainders of the solvent. The final product was filtered in vacuum and dried at 60°C for 4 hours.**

**As a result, 15.4 g of dibutyryl-chitin with the intrinsic viscosity of 1.21 dl/g (determined at 25°C using the dilution viscometer) were obtained.**

### Example 2

### Optimized method of the synthesis and isolation of divaleryl derivative of chitin according to the invention (chitin dipentanoate)

Valeric anhydride (20.5 ml) was placed in a 500 ml three-neck glass round bottom flask and cooled down to the temperature of -5°C to 0°C using the salt water bath. While stirring vigorously with a steel blade mechanical mixer in the shape of crossed anchor stirrers rotating at 50-80 rpm, 1.5 ml of perchloric acid was added dropwise within a period of 10 minutes at the temperature of 0°C to 5°C. Subsequently, 3 g of shrimp chitin purified of the calcium carbonate was dosed in small portions into the acylating mixture. Chitin was characterized by the intrinsic viscosity of 10.8 dl/g (determined at 25°C in a 5%LiCl/DMAC solvent system) and the viscometric average molecular weight calculated according to the formula $\left[η\right] = 0.0024 * {M}_{W}^{0.69}$ equal to 197020.26 g/mol. The reaction mixture was stirred using mechanical stirrer (rotational speed of 80-100 rpm) for 5 min. After thorough mixing of the reaction mixture, the esterification reaction was performed without further mixing at 0°C for additional 7.5 hours. The reaction was terminated by adding to the mixture the 3% aqueous solution of NaHCO₃ (150 ml) and intensive grinding of the reaction mixture using the steel blade mixer in the shape of crossed anchor stirrers with an additional element pulling the distributed reaction mixture off the walls of the flask and reverting in back towards the stirrer in order to assure its thorough homogenization (5000 rpm) to obtain a homogeneous precipitate (60 s) and then left for 15 minutes for further neutralization. After 10 minutes, the precipitate was filtered, placed again in the reaction flask and poured with a fresh portion of 3% aqueous solution of NaHCO₃. Then the grinding step was repeated for 30 seconds and the mixture was left for another 15 minutes. The precipitate was filtered. The procedure was repeated two more times. Following the filtration of the precipitate in the last stage of neutralization, the precipitate was washed with distilled water using the Buchner funnel to obtain pH=7.0 (1 l of distilled water). When the filtrate reached pH=7, the polymeric precipitate was filtered in vacuum and further dried in air at room temperature for another 12 hours. Obtained raw product was then dissolved in 80 ml of acetone. Fully dissolved polymeric solution was then subjected to clarifying filtration using the G2 density Schott glass funnel. The filtrate was precipitated in 6-fold (v/v) excess of distilled water, and subsequently filtered in vacuum using the Buchner's funnel and washed in approximately 2 litres of distilled water in order to remove the remainders of the solvent. The final product was filtered in vacuum and dried at 80°C.

As a result, 3.5 g of divaleryl-chitin with the intrinsic viscosity of 1.51 dl/g (determined at 25°C using the dilution viscometer) were obtained.

Molar masses (Mₙ, M_{w}, M_{z}) and mass dispersion (M_{w}/Mₙ) were determined by gel chromatography in a measurement system consisting of the Agilent Technology 1200 isocratic pump, the DAWN HELEOS (Wyatt Technologies) multi-angle light scattering detector (λ=658 nm), the Δn-2010 RI (WGE Dr. Bures) refractometric detector and a set of PL gel guard, PL gel MIXED-C x 2 and PSS GRAM 100 Å columns. Measurements were performed in DMF containing 5 mmol/I LiBr at 45°C, using the eluent flow of 1 ml/min. Prior to injection onto column, the sample solution was filtered using the 0.20 µm pore size SRP 15 filter. The value of increment of the refractive index was determined using the SEC-3010 dn/dc refractometric detector at the wavelength of λ=620nm. ${M}_{n} = 1.78 ⋅ {10}^{5} \left[g/mol\right]$ ${M}_{w} = 2.80 ⋅ {10}^{5} \left[g/mol\right]$ ${M}_{z} = 4.03 ⋅ {10}^{5} \left[g/mol\right]$ ${M}_{w} / {M}_{n} = 1.45$

The elemental analysis was performed using the Elementar's VARIO EL III analyser. The combustion of the sample was performed at the temperature of 1150°C in a helium atmosphere containing oxygen.

%C - 56.48; %H - 8.06; %N - 3.62.

### Example 3

### Optimized method of the synthesis and isolation of hexane derivative of chitin according to the invention (chitin dihexanoate)

Hexanoic anhydride (74 ml) was placed in a 500 ml three-neck glass round bottom flask and cooled down to 0°C using the salt water bath. While stirring vigorously with an anchor-shaped mechanical stirrer rotating at 100 rpm, 51 ml of methanesulfonic acid was added dropwise within 10 minutes at the temperature kept in range from 0°C to 5°C. Subsequently, 10 g of shrimp chitin purified of the calcium carbonate was dosed in small portions into the acylating mixture. Chitin was characterized by the intrinsic viscosity of 10.8 dl/g (at 25°C in a 5%LiCl/DMAC solvent system) and the viscometric average molecular weight calculated according to the Mark-Houwink equation $\left[η\right] = 0.0024 * {M}_{W}^{0.69}$, equal to 197171.28 g/mol. The reaction mixture was stirred with a mechanical stirrer at 200 rpm for 15 minutes. After thorough mixing of the reaction mixture, the esterification reaction was performed without further mixing at 0°C for additional 2.5 hours. The reaction was terminated by adding to the mixture the 2.5% aqueous solution of NaHCO₃ (200 ml) and intensive grinding of the reaction mixture using the steel blade mixer in the shape of crossed anchor stirrers with an additional element pulling the distributed reaction mixture off the walls of the flask and reverting it back towards the stirrer in order to assure its thorough homogenization (5000 rpm) to obtain a homogeneous precipitate (30 s) and then left for 25 minutes for further neutralization. After 25 minutes, the precipitate was filtered, placed again in the reaction flask and poured with a fresh portion of 2.5 % aqueous solution of NaHCO₃. Then the grinding step was repeated for 30 seconds and the whole mixture was then left for another 15 minutes. The precipitate was filtered. The procedure was repeated three more times. Following the filtration of the precipitate in the last stage of neutralization, the precipitate was washed with distilled water using the Buchner funnel to obtain pH=7.0. When the filtrate reached pH=7, the sticky polymeric precipitate was filtered in vacuum and further dried in air for another 12 hours at room temperature. Obtained raw product was then dissolved in 600 ml ethanol denatured with 5% of distilled water. Fully dissolved polymeric solution was then subjected to clarifying filtration using the G1 density Schott glass funnel and then Buchner funnel covered with diatomaceous earth. The filtrate was precipitated in 6-fold (v/v) excess of distilled water and subsequently filtered in vacuum using the Buchner funnel and washed in approximately 5 litres of distilled water in order to remove the remainders of the solvent. The final product was filtered in vacuum and dried at 80°C.

The reaction efficiency was 95%, the intrinsic viscosity of the product determined in acetone at 25°C using the dilution viscometer was 2.16 dl/g.

Molar masses (Mₙ, M_{w}, M_{z}) and the mass dispersion (M_{w}/Mₙ) were determined by gel chromatography in a measurement system consisting of the Agilent Technology 1200 isocratic pump, the DAWN HELEOS (Wyatt Technologies) multi-angle light scattering detector (λ=658 nm), the Δn-2010 RI (WGE Dr. Bures) refractometric detector and a set of PL gel guard, PL gel MIXED-C x 2 and PSS GRAM 100 Å columns. Measurements were performed in DMF containing 5 mmol/I LiBr at 45°C, using the eluent flow of 1 ml/min. Prior to injection onto column, the sample solution was filtered using the 0.20 µm pore size SRP 15 filter. The value of increment of the refractive index was determined using the SEC-3010 dn/dc refractometric detector at the wavelength of λ=620nm. ${M}_{n} = 2.95 ⋅ {10}^{5} \left[g/mol\right]$ ${M}_{w} = 4.52 ⋅ {10}^{5} \left[g/mol\right]$ ${M}_{z} = 9.95 ⋅ {10}^{5} \left[g/mol\right]$ ${M}_{w} / {M}_{n} = 1.53$

The elemental analysis was performed using the Elementar's VARIO EL III analyser. The combustion of the sample was performed at the temperature of 1150°C in a helium atmosphere containing oxygen.

%C - 59.09; %H -8.59; %N - 3.28.

### Example 4

### Optimized method of the synthesis and isolation of chitin butyryl-valeric copolyester

Butyric anhydride (8.7 ml) and valeric anhydride (10.2 ml) were placed in a 500 ml three-neck glass round bottom flask and cooled down to temperature of -3°C to 0°C using the salt water bath. While stirring vigorously with an anchor-shaped mechanical stirrer rotating at 180 rpm, 1.5 ml of perchloric acid was added dropwise into the flask kept at the temperature of 0°C to 5°C within 15 minutes. Subsequently, 3 g of shrimp chitin purified of the calcium carbonate was dosed in small portions into the acylating mixture. Chitin was characterized by the intrinsic viscosity of 10.8 dl/g (at 25°C in a 5%LiCl/DMAC solvent system) and the viscometric average molecular weight calculated according to the Mark-Houwink equation $\left[η\right] = 0.0024 * {M}_{W}^{0.69}$ equal to 197171.28 g/mol. The reaction mixture was stirred with a mechanical stirrer at 200 rpm for 10 minutes. After thorough mixing of the reaction mixture, the esterification reaction was performed without further mixing at room temperature for additional 3 hours. The reaction was terminated by adding to the mixture the 2.5% aqueous solution of NaHCO₃ (100 ml) and intensive grinding of the reaction mixture using the steel blade mixer in the shape of crossed anchor stirrers with an additional element pulling the distributed reaction mixture off the walls of the flask and reverting it back towards the stirrer in order to assure its thorough homogenization (800 rpm) to obtain a homogeneous precipitate (20 s) and then left for 15 minutes for further neutralization. After 10 minutes, the precipitate was filtered, placed again in the reaction flask and poured with a fresh portion of 2.5 % aqueous solution of NaHCO₃. Then the grinding step was repeated for 30 seconds and the whole mixture was left for another 10 minutes. The precipitate was filtered. The procedure was repeated two more times. Following the filtration of the precipitate in the last stage of neutralization, the precipitate was washed with distilled water using the Buchner funnel to obtain pH=7. Once the filtrate reached pH=7, the polymeric precipitate in the form of fine granules was filtered in vacuum and dried further in air at room temperature for another 12 hours. Obtained raw product was then dissolved in 60 ml of acetone. Fully dissolved polymeric solution was then subjected to clarifying filtration using the G2 density Schott glass funnel. The filtrate was precipitated in 5-fold excess of distilled water, and subsequently filtered in vacuum using the Buchner funnel and washed in approximately 2 litres of distilled water in order to remove the remainders of the solvent. The final product was filtered in vacuum and dried at 80°C.

The reaction efficiency was 74%, the intrinsic viscosity of the product (determined at 25°C in acetone using the dilution viscometer) was 1.1 dl/g.

### Example 5

Comparison of the isolation of divaleryl derivative of chitin (chitin dipentanoate) according to the method described in the current state of the art and the method described in the invention.

The steps of preparation of the acylating mixture, chitin acylation by acylating mixture were the same for all samples (2a, 2c, 2d, 3a, 3c, 3d), the conditions under which the reaction was conducted as provided in Table 1.

The acylating mixture preparation: dropwise addition of 1.5 ml of perchloric acid into 20.5 ml valeric anhydride kept within the temperature range from -2°C to 0°C.

Chitin acylation: addition of chitin (3 g) in small portions into acylating mixture kept at 0°C to 5°C, with continuous stirring.

The method of raw product isolation according to the current state of the art in the case of the 2a, 2c, 2d samples: THF (used for extraction of unreacted organic acids) / water / drying / dissolution in acetone / precipitation in water / drying.

The method of raw product isolation according to the invention in the case of the 3a, 3c, 3d samples: 2.5% NaHCO3 (aq.) with homogenization using the steel blade mechanical mixer in the shape of crossed anchor stirrers with an additional element pulling the distributed reaction mixture off the walls of the reaction flask and reverting it back towards the stirrer in order to ensure its thorough homogenization / water / drying / dissolution in acetone / precipitation in water / drying.

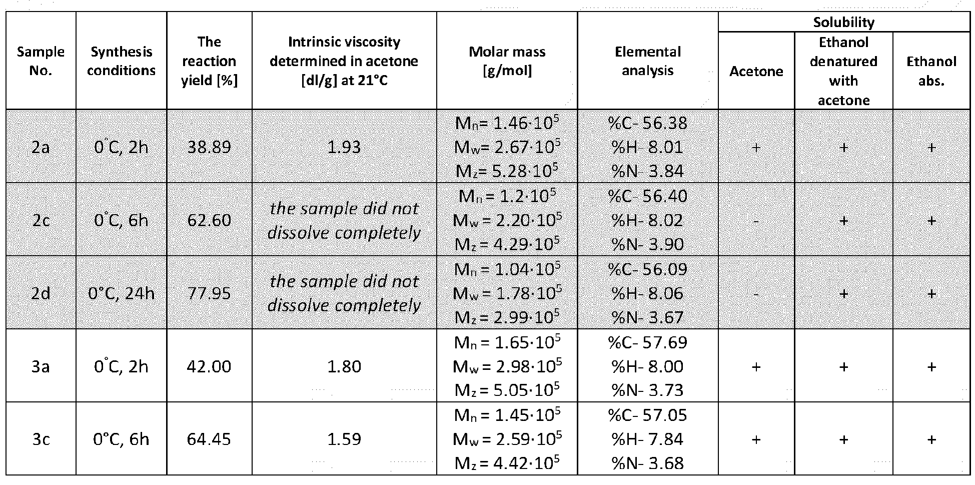

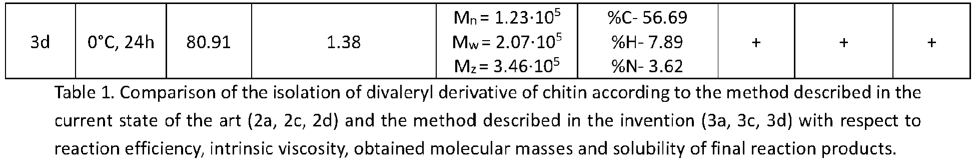

Based on the above presented table it is obvious, that the classic method (known from the description of the current state of the art - extraction of unreacted organic acids using organic solvents) does not allow for divaleryl derivative of chitin of high molecular masses to be obtained. Obtained are only products with widely molecular weight distribution and only partial solubility. The method of isolation of divaleryl derivative of chitin from the solution using the 2.5% aqueous solution of NaHCO₃ (i.e. according to the invention) allows for higher reaction efficiencies and final polymeric products of homogeneous masses and high degree of esterification to be obtained.

### Example 6

### Comparison of two methods of isolation of dihexanoic derivative of chitin (chitin dihexanoate)

Isolation of the reaction product conducted according to the method described in the current state of the art as well as according to the method described in this invention was performed following the synthesis termination. The steps of acylating mixture preparation and the acylation of chitin using the acylating mixture, as well as the reaction conditions were the same, and are described below.

The acylating mixture preparation: dropwise addition of 15.3 ml of methanesulfonic acid into 22.2 ml of hexanoic anhydride kept at the temperature within the range from -2°C to 2°C.

Chitin acylation: addition of chitin (3 g) in small portions into acylating mixture kept at 0°C to 5°C, with continuous stirring.

The reaction conditions: 2.5 hours, temp. 21°C.

### Methods of isolation of the reaction products:

I - the classic method (according to the current state of the art), based on dissolution in an organic solvent and subsequent precipitation in water,
II - the method described in the invention, employing the 2.5% aqueous solution of NaHCO₃ in order to isolate the raw product and its further purification via dissolution in organic solvent and precipitation in the excess water relative to the volume of polymer solution (with respect to the degree of difficulty of the isolation of the final reaction product).

**Table 2. Comparison of the product isolation from the reaction mixture according to methods described in the current state of the art (I) and the method described in the invention (II), with respect to characteristics of the product purification steps.**

| Characteristics of the product purification steps | The method of isolation of raw reaction product | |
|---|---|---|
| | I Classic | II According to the invention |
| Solvent | Ethanol denatured with acetone | Ethanol denatured with acetone |
| The amount of the solvent [ml] | 40 | 50 |
| Characteristics of dissolution ^{I} | ++ (increase of temperature to 58°C) | ++ |
| Filtration I - through the G1 density Schott funnel | ++ | ++ |
| Characteristics and the form of precipitated polymer I | -- sticky grease | ++ slightly sticking fibres |
| Washing with distilled water | (large quantitative losses due to form of the polymer) | ++ |
| Efficiency after the precipitation I | 48.9% | 87.99% |
| Characteristics of dissolution II | Gelation of the system | ++ |
| Filtration II - through the G2 density Schott funnel | no product was isolated | ++ |
| Characteristics and the form of precipitated polymer II | no product was isolated | ++ |
| **The final reaction efficiency** | **no product was isolated** | **85.2 %** |

Based on Table 2 it seems obvious, that the method described in the invention allows for:
- the products to be obtained from reaction masses in different forms; moreover, the form of obtained polymer, the structure and consistency of the obtained product are also of utmost importance during the process of isolation when performed on an industrial scale.
- obtaining the dihexanoate derivative of chitin with very high reaction yields (87.99%) as compared to the classic method (48.9%); the possibility of conducting an additional step of product purification which does not cause any losses in reaction efficiency, yet allows for the product completely purified of chitin contaminations to be obtained.
- A very important aspect of the method described in this invention is the lack of the phenomenon of exothermy upon addition of the organic solvent to raw product, as is the case in the classic method. A sudden rise of the temperature in thick polymeric mass is dangerous and difficult to be controlled for, especially should the process be conducted on an industrial scale.

### Example 7

Comparison of three methods of isolation of dibutyryl-chitin (Methods ^{I} and II are known from the current state of the art, the method III comprises the subject of this invention) with respect to difficulties related to separation of the final product, number of steps leading to obtainment of the final product with desired purity, the quantities of chemical reagents used, the efficiency of the whole process and the intrinsic viscosity of the final product. The results are presented in Table 3.

Isolation of the reaction product carried out according to the methods described in the current state of the art as well as according to the one described in this invention was performed following the synthesis termination. The steps of acylating mixture preparation and the acylation of chitin using the acylating mixture, together with reaction conditions were the same, and are described below.

The acylating mixture preparation: dropwise addition of 16 ml of methanesulfonic acid into 27 ml of butyric anhydride kept within the temperature range from -2°C to 0°C.

Chitin acylation: addition of chitin purified of calcium carbonate (5g) in small portions into acylating mixture kept at 0°C to 5°C, while continuously stirring.

The reaction conditions: 2.5 hours, temp. 21°C.

### Isolation and purification of dibutyryl-chitin from the dense reaction mass

*Method I* (according to the current state of the art) - addition of 150 ml of ethyl acetate into the dense polymeric mass while stirring / gradual addition of the NaHCO₃ to the reaction mixture until pH=7, with stirring / filtration through the G3 pore density sintered glass funnel / washing the polymeric mass with another 150 ml portion of ethyl acetate / subsequent filtration through the G3 pore density sintered glass funnel / drying in air / washing in water until pH=7 / drying of the raw product / dissolution in ethyl alcohol denatured with acetone / filtration of the polymer solution through the G1 pore density sintered glass funnel / separation of dibutyryl-chitin in 6-fold excess water / washing the product until complete removal of the odour of butyric acid and removal of ethyl methanesolfonate.

*Method II* (according to the current state of the art) - addition of 150 ml of ethyl acetate into the dense polymer mass while stirring / gradual addition of the NaHCO₃ to the reaction mixture until pH=7, with continuous stirring / filtration through the G3 pore density sintered glass funnel / washing the polymeric mass with another 150 ml portion of ethyl acetate / subsequent filtration through the G3 pore density sintered glass funnel / drying of the polymer mass in air / dissolution in ethyl alcohol denatured with acetone / filtration of the polymer solution through the G1 pore density sintered glass funnel / separation of dibutyryl-chitin in 6-fold excess water / washing the product until complete removal of the odour of butyric acid and removal of ethyl methanesolfonate.

Method III (according to this invention) - Procedure 1: adding 200 ml of 2.5% aqueous solution of NaHCO₃ to the dense polymer mass and its grinding using the steel blade mixer in the shape of crossed anchor stirrers (1000 rpm) until a homogeneous precipitate is obtained (45 seconds) and allowing for 15 minutes for further neutralization, filtration of the raw product using the G1 pore density sintered glass funnel / repeating the procedure 1 three times / Washing of the raw product in distilled water until pH=7 / drying in drier / dissolution in ethyl alcohol denatured with acetone / filtration of polymer solution through the G1 pore density sintered glass funnel / separation of dibutyryl-chitin in 4-fold excess water / washing of the product until complete removal of the odour of butyric acid and ethyl methanesulfonate.

**Table 3. Comparison of three methods of isolation of dibutyryl-chitin (Methods I and II are known from the current state of the art, the method III comprises the subject of this invention) with respect to difficulties related to separation of the final product, number of steps leading to obtainment of the final product with desired purity, the quantities of used chemical reagents, the efficiency of the whole process and intrinsic viscosity of the final product.**

| **Characteristics of the step of product isolation / characteristics of the final product** | **Method of dibutyryl-chitin** | | |
|---|---|---|---|
| | **Method I** | **Method II** | **Method III** |
| **Extraction of unreacted acids from dense reaction mass in ethyl acetate using classic mechanical stirrer** | The extraction of unreacted acids into organic solvent due to difficult form of reaction mass. | The extraction of unreacted acids into organic solvent due to difficult form of reaction mass. | THE LACK OF STEP |
| | The reaction mass unable to be stirred using classic methods. | The reaction mass unable to be stirred using classic methods. | |
| **Neutralization - employing NaHCO₃ with continuous stirring in the case of method I and II / employing the 2.5% NaHCO₃ (aq.) with simultaneous grinding of the polymeric mass in the case of the method III** | Neutralization / i.e. obtained pH of polymer mass equal to 4 due to lack of solubility of NaHCO₃ in ethyl acetate. | Neutralization / i.e. obtained pH of polymer mass equal to 4 due to lack of solubility of NaHCO₃ in ethyl acetate. | Effective neutralization of unreacted acids. |
| | | | pH(suspension)=7. |
| **The form of polymer following the neutralization step** | Thick sticky polymer mass. | Thick sticky polymer mass. | Crushed, granulated, not sticky precipitate. |
| **Washing with water after neutralization until pH=7** | Initial pH of the filtrate equal to 3. Up to 18 l of water were used in order to obtain pH=7. | The lack of step | Initial pH of the filtrate equal to 7. |
| | | | Up to 4 l of water were used in order to wash the filtrate. |
| **Dissolution in denatured ethanol** | Increase of the temperature to 40°C. | Increase of the temperature to 45°C Gelation of the system. | The lack of any temperature rise. |
| | Partially gelled system. | | Good solubility of the polymer in solvent. |
| **Filtration of the polymer solution** | Hindered filtration due to partly gelled system. | The lack of any possibility of filtration. | Easy and quick filtration. |
| **The amount of water used to precipitate the polymer and to purify the final product from the remainders of ethyl methanesulfonate and butyric acid** | 6-fold excess of the water relative to the volume of polymer solution. | This step was not performed owing to the gelation of the system. | 4-fold excess of the water relative to the volume of polymer solution. |
| | 7 l | | 4 l |
| **The reaction efficiency [%]** | 23.8 | Unable to isolate the final product. | 87.0 |
| **Intrinsic viscosity [dl/g] determined in acetone at 25°C** | Unable to determine the value due to insolubility of obtained product in acetone. | Unable to determine the value due to insolubility of obtained product in acetone. | 1.25 |
| **The quantity of raw materials required for separation and purification of DBC** | 300 ml of ethyl acetate | 300 ml of ethyl acetate | 800 ml of 2.5% NaHCO₃(aq.) |
| | 250 ml of ethyl alcohol denatured with acetone 25 l of distilled water | 300 ml of ethyl alcohol denatured with acetone Lack of the step of washing with distilled water | 150 ml of ethyl alcohol denatured with acetone 8 l of distilled water |

### Example 8

Comparison of two methods of isolation of divaleryl-chitin (method l is known from the current state of the art, the method II comprises the subject of this invention) with respect to difficulties related to separation of the final product, number of steps leading to obtainment of the final product with desired purity, the quantities of chemical reagents used, the efficiency of the whole process and the intrinsic viscosity of the final product. The data are provided in Table 4.

Isolation of the reaction product carried out according to the methods described in the current state of the art as well as according to the one described in this invention were performed following the synthesis termination. The steps of acylating mixture preparation and the acylation of chitin using the acylating mixture, together with reaction conditions were the same, and are described below.

The acylating mixture preparation: dropwise addition of 2.5 ml of perchloric acid into 34.2 ml of valeric anhydride kept in temperature range from 0°C to 2°C.

Chitin acylation: addition of chitin purified of calcium carbonate (5g) in small portions into acylating mixture kept at 0°C to 3°C, under continuous stirring.

The reaction conditions: 2 hours, temp. 21°C.

### Isolation and purification of divaleryl-chitin from the reaction mass in the form of dense suspension.

*Method I* (according to the current state of the art) - addition of 150 ml of ethyl acetate into the reaction mass in the form of dense suspension while stirring / gradual addition of NaHCO₃ to the reaction mixture until pH=7, with continuous stirring / filtration through the G3 pore density sintered glass funnel / washing the polymeric mass in the powder form with another 150 ml portion of ethyl acetate / subsequent filtration through the G3 pore density sintered glass funnel / drying in air / washing in water until pH=7 / drying of the raw product / dissolution in 120 ml of ethyl alcohol denatured with acetone / filtration of the polymer solution through the G1 pore density sintered glass funnel / separation of dibutyryl-chitin in 6-fold excess water / washing the product until complete removal of valeric acid and perchloric acid.

*Method II-* Procedure 1: addition of 150 ml of 2.5% aqueous solution of NaHCO₃ into the reaction mass in the form of dense solution and grinding using the steel blade mechanical mixer in the form of crossed anchor stirrers with an additional element pulling the distributed reaction mixture off the walls of reaction flask and reverting it back towards the stirrer (250 rpm) to obtain homogeneous precipitate (20 s), and allowing for 30 minutes until further neutralization, filtration of the raw product using the G1 pore density sintered glass funnel/ repeating the procedure 1 four times / washing the raw product with distilled water to pH=7 / drying in drier / dissolution in 110 ml of ethyl alcohol denatured with acetone / filtration of polymer solution through the G1 pore density sintered glass funnel / separation of dibutyryl-chitin in 5-fold excess water relative to initial volume of polymer solution / washing the product from traces of valeric acid.

**Table 4. Comparison of two methods of isolation of divaleryl-chitin (Method I - known from the current state of the art, the method II - the subject of this invention) with respect to difficulties related to isolation of the final product, number of steps leading to obtainment of the final product with desired purity, the quantities of chemical reagents used, the efficiency of the whole process and the intrinsic viscosity of the final product.**

| **Characteristics of the step of the product isolation / characteristics of the final product** | **The method of divaleryl-chitin isolation** | |
|---|---|---|
| | **Method I** | **Method II** |
| **Extraction of unreacted acids from the reaction mass in the form of thick solution into ethyl acetate using classic mechanical stirrer** | Effective **extraction of** unreacted valeric acid into organic solvent | **THE LACK OF STEP** |
| **Neutralization - employing NaHCO₃ with continuous stirring in the case of method I / employing 2.5% NaHCO₃ aq. with simultaneous grinding of polymer mass in the case of the method II** | Neutralization / reached pH of polymer mass equal to 5 due to lack of solubility of NaHCO₃ in ethyl acetate. | Effective neutralization of unreacted acids (valeric acid and perchloric acid) pH (solution)=7. |
| **The form of polymer following the neutralization step** | Granulated precipitate | Slightly sticky granulated precipitate |
| **Washing with water after neutralization until pH=7** | Initial pH of the filtrate equal to 4. Up to 10 l of water were used in order to obtain pH=7. | Initial pH of the filtrate equal to 7. Up to 6 l of water were used in order to wash the filtrate. |
| **Dissolution in denatured ethanol** | The polymer partially soluble in the solvent The large part of the precipitate insoluble (cleavage of NH-COCH₃ bonds and formation of NH₂, what leads to insolubility in denatured ethanol and other commonly used organic solvents). | Good solubility of the polymer in the solvent. |
| **Filtration of the polymer solution** | Impaired filtration due to high amount of insoluble precipitate | Easy and quick filtration. |
| **The amount of water used to precipitate the polymer and to purify the final product from the remainders of unreacted acids** | 6-fold excess water relative to the volume of polymer solution. | 5-fold excess water relative to the volume of polymer solution. |
| | 8 l | 5 l |
| **The reaction efficiency [%]** | 29.51 | 83.0 |
| **The intrinsic viscosity [dl/g] determined in acetone at 25°C** | 0.65 | 1.05 |
| **The quantities of raw materials required for isolation and purification of divaleryl-chitin** | 300 ml of ethyl acetate | 750 ml of 2.5% NaHCO₃ (aq.) |
| | 120 ml of ethyl alcohol denatured with acetone | 110 ml of ethyl alcohol denatured with acetone |
| | 18 l of distilled water | 11 l of distilled water |

### Example 9

Comparison of two methods of isolation of dibutyryl-chitin (method I known from the current state of the art, method II being the subject of this invention) with respect to difficulties related to isolation of the final product, number of steps leading to obtainment of the final product with desired purity, the quantities of chemical reagents used, the efficiency of the whole process and the intrinsic viscosity of the final product. The data are provided in Table 5.

Isolation of the reaction product according to method described in the current state of the art and according to this invention was performed following the synthesis termination, the course of which, described below, was the same in both cases. The course of the synthesis (according to the method described in the current state of the art - Patent application No. P.400256):
10 grams of powdered krill chitin purified of calcium carbonate, with the value of intrinsic viscosity determined in DMAC/5%LiCl of 10.8 dl/g were placed in double-neck glass flask and poured with 52 ml of 98% butyric anhydride. Subsequently, the mixture was stirred and left for 3 hours at 20°C. After 3 hours, the mixture was placed in a thermostat maintaining the temperature of 25°C and within 15 minutes an aliquot of 4.4 ml of 70-72% perchloric acid was added dropwise. The mixture was stirred thoroughly. The reaction was conducted at 25°C for 3 hours.

### Isolation and purification of dibutyryl-chitin from the reaction mass in the form of powder.

*Method I* (according to the current state of the art) - addition of 150 ml of ethyl acetate into the dense polymeric mass while stirring / gradual addition of NaHCO₃ to the reaction mixture until pH=7, with stirring / filtration through the G3 pore density sintered glass funnel / washing the polymeric mass with another 150 ml portion of ethyl acetate / subsequent filtration through the G3 pore density sintered glass funnel / drying in air / washing in water until pH=7 / drying of the raw product / dissolution in ethyl alcohol denatured with acetone / filtration of the polymer solution through the G1 pore density sintered glass funnel / separation of dibutyryl-chitin in 6-fold excess water / washing of the product until complete removal of the odour of butyric acid.

*Method II* - Procedure 1: addition of 200 ml of 2.5% aqueous solution of NaHCO₃ into the thick polymer mass and its grinding using the steel blade mixer in the shape of crossed anchor stirrers with an additional element pulling the distributed reaction mixture off the walls of the reaction flask and reverting it back towards the stirrer (800 rpm) to obtain a homogeneous precipitate (60 seconds) and allowing for 30 minutes until further neutralization, filtration of the raw product using the G1 pore density sintered glass funnel / repeating the procedure 1 five times / washing of the raw product in distilled water until pH=7 / drying in drier / dissolution in ethyl alcohol denatured with acetone / filtration of polymer solution through the G1 pore density sintered glass funnel / separation of dibutyryl-chitin in 4-fold excess water / washing of the product until complete removal of the odour of butyric acid.

**Table 5. Comparison of two methods of isolation of divaleryl-chitin (Method I - known from the current state of the art, the method II - the subject of this invention) with respect to difficulties related to isolation of the final product, number of steps leading to obtainment of the final product with desired purity, the quantities of chemical reagents used, the efficiency of the whole process and the intrinsic viscosity of the final product.**

| **Characteristics of the step of the product isolation / characteristics** of **the final product** | **Method of isolation of dibutyryl-chitin** | |
|---|---|---|
| | **Method I** | **Method II** |
| **Extraction of unreacted acids from the reaction mass in the form of suspension into ethyl acetate using the classic mechanical stirrer** | Effective extraction of unreacted butyric acid into organic solvent | THE LACK OF STEP |
| **Neutralization - employing NaHCO₃ with continuous stirring in the case of method I / employing 2.5% NaHCO₃ aq. with simultaneous grinding of polymer mass in the case of the method *II*** | Neutralization / i.e. obtained pH value of the polymer mass equal to | Effective neutralization of unreacted acids. |
| | 3 due to lack of solubility of NaHCO₃ in ethyl acetate. | pH(suspension)=7. |
| **The form of polymer following the neutralization step** | Precipitate in the form of a powder. | Crushed powdered precipitate. |
| **Washing with water after neutralization until pH=7** | Initial pH of the filtrate equal to 8. Up to 5 l of water were used in order to obtain pH=7. | Initial pH of the filtrate equal to 7. Up to 3 l of water were used in order to obtain pH=7. |
| **The form** | Precipitate in the form of a powder. | Crushed powdered precipitate. |
| **Dissolution in denatured ethanol** | Good solubility of the polymer in solvent. | Good solubility of the polymer in solvent. |
| **Filtration of the polymer solution** | Slow filtration due to the occurrence of precipitate obtained as a result of the cleavage of NH-COCH₃ bonds and formation of NH₂ (what leads to insolubility in denatured ethanol and other commonly used organic solvents). | Easy and quick filtration. |
| **The amount of water used to precipitate the polymer and to purify the product from the remainders of ethyl methanesulfonate and butyric acid** | 6-fold excess water relative to the volume of polymer solution. | 4-fold excess water relative to the volume of polymer solution. |
| | 13 l | 9 l |
| **The reaction efficiency [%]** | 73.8 | 79.9% |
| **The intrinsic viscosity [dl/g] determined in acetone at 25°C** | 0.68 | 0.69 |
| **The quantities of raw materials required for isolation and purification of DBC** | 300 ml of ethyl acetate containing 6 g NaHCO₃ | 1200 ml of 2.5% NaHCO₃ (aq.) containing 3 g NaHCO₃. |
| | 300 ml of ethyl alcohol denatured with acetone | 180 ml of ethyl alcohol denatured with acetone |
| | 18 l of distilled water | 12 l of distilled water |

### Example 10

### Comparison of the extraction efficiency depending on the way in which the synthesis is carried out using dibutyryl-chitin as an example

### Version A: The course of the synthesis and the method of isolation described in the current state of the art (Patent application No. P.400256):

10 grams of powdered krill chitin purified of calcium carbonate with the value of intrinsic viscosity determined in DMAC/5%LiCl of 11.2 dl/g were placed in a double-neck glass flask and poured with 52 ml of 98% butyric anhydride. Subsequently, the mixture was stirred and left for 3 hours at 20°C. After 3 hours, the mixture was placed in a thermostat maintaining the temperature of 25°C and within 15 minutes an aliquot of 4.4 ml of 70-72% perchloric acid was added dropwise. The mixture was stirred thoroughly. The reaction was conducted at 25°C for 3 hours. The reaction mass was obtained in the form of a dense suspension.

METHOD OF ISOLATION (Method I) - addition of 150 ml of ethyl acetate into the reaction mixture while stirring / gradual addition of NaHCO₃ to the reaction mixture until pH=7, with stirring / filtration through the G3 pore density sintered glass funnel / washing the polymeric mass with another 150 ml portion of ethyl acetate / subsequent filtration through the G3 pore density sintered glass funnel / drying in air / washing in water until pH=7 / drying of the raw product / dissolution in ethyl alcohol denatured with acetone / filtration of the polymer solution through the G1 pore density sintered glass funnel / separation of dibutyryl-chitin in 6-fold excess water relative to the volume of polymer solution / washing of the final product until complete removal of the odour of butyric acid.

### Version B: The course of the synthesis compatible with the method of isolation and purification according to the invention

Butyric anhydride (54 ml), placed in a double-neck flask and kept within the temperature range from -2°C to 0°C, was added dropwise with 32 ml of 99% methanesulfonic acid and stirred continuously. Then, under continuous stirring and within the temperature range of 0°C to 5°C, the acylating mixture was added with 10 g of krill chitin dosed in small portions. The krill chitin was purified of the calcium carbonate and characterized with the value of intrinsic viscosity determined in DMAC/5%LiCl of 11.2 dl/g. Subsequently, the mixture was stirred thoroughly and left for 2.5 hours at 21°C. Once the reaction was terminated, the reaction mass was in the form of a dense polymer mass.

METHOD OF ISOLATION (Method II) - Procedure 1: addition of 400 ml of 2.5% aqueous solution of NaHCO₃ into dense polymer mass and its grinding using the steel blade mixer in the shape of crossed anchor stirrers with an additional element pulling the distributed reaction mixture off the walls of the reaction flask and reverting it back towards the stirrer (1400 rpm) to obtain a homogeneous precipitate (60 seconds) and allowing it for 30 minutes until further neutralization, filtration of the raw product using the G1 pore density sintered glass funnel / repeating the procedure 1 four times / washing the raw product in distilled water until pH=7 / drying in drier / dissolution in ethyl alcohol denatured with acetone / filtration of polymer solution through the G1 pore density sintered glass funnel / separation of dibutyryl-chitin in 4-fold excess water / washing the product until complete removal of the odour of butyric acid and removal of ethyl methanesulfonate.

Summary of outcomes of the Method I (according to the current state of the art) and Method II (according to the invention) with respect to difficulties related to isolation of the final product, number of steps leading to obtainment of the final product with desired purity, the quantities of chemical reagents used, the efficiency of the whole process and intrinsic viscosity number of the final product is provided in Table 6.

**Table 6. Summary of outcomes of the Method I (according to the current state of the art) and Method II (according to the invention) with respect to difficulties related to isolation of the final product, the number of steps leading to obtainment of the product with desired purity, the quantities of chemical reagents used, the efficiency of the whole process and intrinsic viscosity of the final product.**

| **Characteristics of the step of the product separation / characteristics of the final product** | **Method of isolation of dibutyryl-chitin** | |
|---|---|---|
| | **Method I** | **Method II** |
| Extraction of unreacted acids from the reaction mass in the form of suspension into ethyl acetate using the classic mechanical stirrer | Effective extraction of unreacted butyric acid into organic solvent | THE LACK OF STEP |
| **Neutralization - employing NaHCO₃ with continuous stirring in the case of method I / employing the 2.5% NaHCO₃ aq. with simultaneous grinding of polymer mass in the case of the method II** | Neutralization / i.e. obtained pH value of the polymer mass equal | Effective neutralization of unreacted acids. |
| | to 3 due to lack of solubility of NaHCO₃ in ethyl acetate. | pH(suspension)=7. |
| **The form of polymer following the neutralization step** | Precipitate in the form of a powder. | Crushed, granulated, not sticky precipitate. |
| **Washing with water after neutralization until pH=7** | Initial pH of the filtrate equal to 8. Up to 4 l of water were used in order to obtain pH=7. | Initial pH of the filtrate equal to 7. Up to 8 l of water were used in order to obtain pH=7. |
| **Dissolution in denatured ethanol** | Good solubility of the polymer in the solvent. | Lack of temperature rise. |
| | | Good solubility of the polymer in the solvent. |
| **Filtration of the polymer solution** | Slow filtration due to the occurrence of the precipitate obtained as a result of the cleavage of NH-COCH₃ bonds and | Easy and quick filtration. |
| | formation of NH₂ (what leads to insolubility in denatured ethanol and other commonly used organic solvents). | |
| **The amount of water used to precipitate the polymer and to purify the final product from the remainders of ethyl methanesulfonate and butyric acid** | 6-fold excess water relative to the volume of polymer solution. | 4-fold excess water relative to the volume of polymer solution. |
| | 12 l | 8 l |
| **The reaction efficiency [%]** | 73.8 | 88.0 |
| **The intrinsic viscosity [dl/g] determined in acetone at 25°C** | **0.68** | 1.25 |

Table 7. Comparison of the efficiency of the method of isolation depending on the way in which the synthesis is carried out, using dibutyryl-chitin as an example

Irrespective of the synthesis method, its combination with the method of isolation and

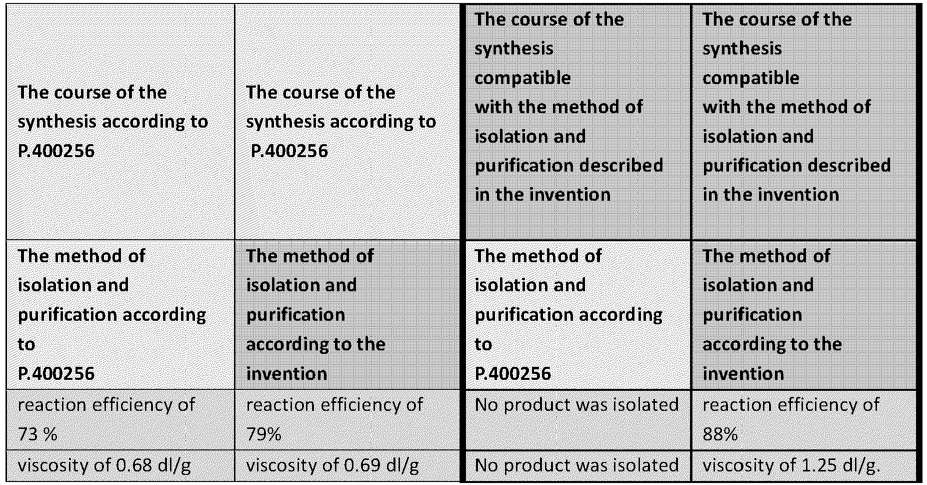

purification presented hereby in the invention provides better outcomes compared to methods presented in the current state of the art. Outcomes are presented as the mean values of reaction efficiency and viscosity values obtained from 3 replicates of each presented method of synthesis and isolation.

## Claims

1. A method of isolation and purification of mono- and/or di- substituted esters and copolyesters of chitin from the reaction mixture of products of chitin acylation performed by using the acid anhydrides, preferably anhydrides of butyric, valeric or hexanoic acid, in the presence of acidic catalysts, preferably methanesulfonic or perchloric acid, reaction mixture being in the form of loose powder as well as the dense paste or grease, comprising steps:
i. adding to the reaction mixture 1-5% w/v, preferably 1-3% w/v aqueous solution of acidic sodium carbonate to neutralize the reaction mixture to the pH = 7,
ii. grinding of the reaction mixture during neutralisation process in order to obtain a homogeneous precipitate,
iii. filtering,
iv. washing with water,
v. drying,
vi. dissolving in solvent which is alcohol or ketone,
vii. precipitating in water,
viii. washing with water,
wherein no extraction process is performed before step i.

2. The method according to claim 1, wherein the step of grinding of the reaction mixture is performed using a steel blade mixer in the shape of crossed anchor stirrers with an additional element pulling the distributed reaction mixture off the walls of a reaction flask and reverting it back towards the stirrer.

3. The method according to claim 1, wherein the steps of addition of aqueous solution of acidic sodium carbonate and grinding of the reaction mixture in order to obtain the homogeneous precipitate is repeated at least 3 times, depending on the type of reaction mixture.

## Patentansprüche

1. Verfahren zur Isolierung und Reinigung von mono- und/oder disubstituierten Estern und Copolyestern von Chitin aus dem Reaktionsgemisch der Produkte der Chitinacylierung, die unter Verwendung von Säureanhydriden, vorzugsweise Anhydriden der Butyric-, Valerinsäure oder Hexansäure, in Gegenwart saurer Katalysatoren, vorzugsweise Methansulfonsäure oder Perchlorsäure, wobei das Reaktionsgemisch sowohl in Form von losem Pulver als auch in Form einer dichten Paste oder eines Fetts vorliegt, umfassend die folgenden Schritte:
i. Zugabe von 1-5 % w/v, vorzugsweise 1-3 % w/v, einer wässrigen Lösung von saurem Natriumcarbonat zum Reaktionsgemisch, um dieses auf einen pH-Wert von 7 zu neutralisieren,
ii. Zerkleinern des Reaktionsgemisches während des Neutralisationsvorgangs, um einen homogenen Niederschlag zu erhalten,
iii. Filtrieren,
iv. Waschen mit Wasser,
v. Trocknen,
vi. Auflösen in einem Lösungsmittel, das Alkohol oder ein Keton ist,
vii. Ausfällung in Wasser,
viii. Waschen mit Wasser,
wobei vor Schritt i kein Extraktionsverfahren durchgeführt wird.

2. Verfahren nach Anspruch 1, wobei der Schritt des Zerkleinerns des Reaktionsgemisches unter Verwendung eines Stahlklingenmischers in Form von gekreuzten Ankerrührern durchgeführt wird, wobei ein zusätzliches Element das verteilte Reaktionsgemisch von den Wänden eines Reaktionskolbens abzieht und es zurück zum Rührer leitet.

3. Verfahren nach Anspruch 1, wobei die Schritte der Zugabe einer wässrigen Lösung von saurem Natriumcarbonat und des Zerkleinerns des Reaktionsgemisches zur Erzielung eines homogenen Niederschlags je nach Art des Reaktionsgemisches mindestens dreimal wiederholt werden.

## Revendications

1. Procédé d'isolement et de purification d'esters et de copolyesters mono- et/ou disubstitués de la chitine à partir du mélange réactionnel des produits d'acylation de la chitine réalisée à l'aide d'anhydrides d'acides, de préférence d'anhydrides butyriques, valérique ou hexanoïque, en présence de catalyseurs acides, de préférence l'acide méthanesulfonique ou l'acide perchlorique, le mélange réactionnel se présentant sous la forme d'une poudre libre ainsi que d'une pâte dense ou d'une graisse, comprenant les étapes suivantes :
i. l'ajout au mélange réactionnel d'une solution aqueuse de carbonate de sodium acide à raison de 1 à 5 % p/v, de préférence de 1 à 3 % p/v, afin de neutraliser le mélange réactionnel jusqu'à un pH = 7,
ii. broyage du mélange réactionnel pendant le processus de neutralisation afin d'obtenir un précipité homogène,
iii. filtration,
iv. lavage à l'eau,
v. séchage,
vi. dissolution dans un solvant, à savoir un alcool ou une cétone,
vii. précipitation dans l'eau,
viii. lavage à l'eau,
aucun procédé d'extraction n'étant effectué avant l'étape i.

2. Procédé selon la revendication 1, dans lequel l'étape de broyage du mélange réactionnel est réalisée à l'aide d'un mélangeur à lames en acier en forme d'agitateurs à ancres croisées, comportant un élément supplémentaire qui retire le mélange réactionnel réparti sur les parois d'un ballon de réaction et le ramène vers l'agitateur.

3. Procédé selon la revendication 1, dans lequel les étapes d'ajout d'une solution aqueuse de carbonate de sodium acide et de broyage du mélange réactionnel afin d'obtenir un précipité homogène sont répétées au moins trois fois, en fonction du type de mélange réactionnel.
